# EUROPÄISCHE PATENTSCHRIFT

(11) **EP 2 750 907 B1**
(45) Veröffentlichungstag und Bekanntmachung des Hinweises auf die Patenterteilung: **28.10.2015**
(21) Anmeldenummer: 12737495.7
(22) Anmeldetag: 18.07.2012
(51) Int. Cl.: B60G 13/00, F16F 9/38, F16F 9/54, F16F 15/00

(54) **DÄMPFERLAGER ZUR ABSTÜTZUNG EINER FAHRWERKSKOMPONENTE AN EINER KRAFTFAHRZEUGKAROSSERIE**
DAMPER BEARING FOR SUPPORTING A CHASSIS COMPONENT ON A MOTOR VEHICLE CHASSIS
SUPPORT D'AMORTISSEUR DESTINÉ À SUPPORTER UN COMPOSANT DE SUSPENSION SUR UNE CARROSSERIE DE VÉHICULE AUTOMOBILE

(30) Priorität: 03.09.2011 DE 102011112405
(43) Veröffentlichungstag der Anmeldung: 09.07.2014
(73) Patentinhaber: Audi AG, 85045 Ingolstadt (DE)
(72) Erfinder: WILLEMS, Marco, 85053 Ingolstadt (DE)
(86) Internationale Anmeldenummer: PCT/EP2012/003015
(87) Internationale Veröffentlichungsnummer: WO 2013/029717

(56) Entgegenhaltungen:
- DE-A1- 4 142 885
- DE-A1- 4 219 151
- DE-A1- 10 147 604
- JP-A- 59 065 640

## Beschreibung

Die Erfindung betrifft ein Dämpferlager zur Abstützung einer Fahrwerkskomponente an einer Kraftfahrzeugkarosserie gemäß der im Oberbegriff des Anspruches 1 angegeben Art.

Derartige Dämpferlager sind in vielerlei Ausgestaltungen bekannt und werden beispielsweise in Radaufhängungen von Kraftfahrzeugen eingesetzt. Üblicherweise verbinden sie einen Stoßdämpfer oder auch ein Federbein, das einen Stoßdämpfer umfasst, mit der Karosserie des Kraftfahrzeugs. Neben der Abstützfunktion soll das Dämpferlager vor allem auch für eine akustische Entkopplung und Dämpfung sorgen.

Ein gattungsgemäßes Dämpferlager ist beispielsweise in der DE 101 47 604 A1 offenbart. Als nachteilig erweist sich hierbei, dass insbesondere bei hochfrequenten Anregungen im hörbaren Bereich die akustischen Dämpfungseigerischaften zu wünschen übrig lassen.

Der Erfindung liegt die Aufgabe zugrunde, ein Dämpferlager zur Abstützung einer Fahrwerkskomponente an einer Kraftfahrzeugkarosserie gemäß der im Oberbegriff des Patentanspruches 1 angegebenen Art derart weiterzubilden, dass auch bei hochfrequenten Anregungen eine gute akustische Dämpfung gewährleistet ist.

Diese Aufgabe wird durch die kennzeichnenden Merkmale des Anspruches 1 in Verbindung mit seinen Oberbegriffsmerkmalen gelöst.

Die Unteransprüche bilden vorteilhafte Weiterbildungen der Erfindung.

In bekannter Art und Weise umfasst das Dämpferlager zur Abstützung einer Fahrwerkskomponente an einer Kraftfahrzeugkarosserie ein erstes Lagerelement, über das das Lager an der Kraftfahrzeugkarosserie festgelegt ist und ein zweites Lagerelement, welches mit der Fahrwerkskomponente fest verbunden ist. Zwischen den beiden Lagerelementen ist in radialer Richtung r betrachtet ein Dämpfungselement aus einem stoßdämpfenden Material angeordnet.

Erfindungsgemäß ist zwischen dem ersten und dem zweiten Lagerelement ein Kopplungselement angeordnet. Über das Kopplungselement steht das zweite Lagerelement mit mindestens einem am Kopplungselement angeordneten und in Reihe zum Dämpfungselement wirksamen, ansteuerbaren, aktiven Federelement in Wirkverbindung.

Durch das erfindurigsgemäß vorgesehene und angeordnete ansteuerbare aktive Federelement ist nunmehr in vorteilhafter Weise ein Dämpflager zur Verfügung gestellt, welches eine Reduzierung/Dämpfung von störenden, hohen Anregungsfrequenzen in einem breiten Frequenzband durch eine gezielte Schwingungsüberlagerung ermöglicht. Hiermit ist eine deutliche Steigerung von Abroll- und Akustikkomfort verbunden.

Gemäß einer ersten Ausführungsform der Erfindung ist das Dämpferelement zwischen dem ersten Lagerelement und dem Kopplungselement angeordnet und das zweite Lagerelement ist über das mindestens eine aktive Federelement am Kopplungselement abgestützt. Diese Ausführungsform erweist sich als vorteilhaft, da die hochfrequenten Anregungen direkt vom aktiven Federelement kompensiert werden und nicht über den Umweg über das Dämpferelement weitergeleitet werden.

Vorzugweise ist hierbei zwischen dem zweiten Lagerelement und dem Kopplungselement ein Anschlagpuffer ausgebildet. Die Anordnung eines Anschlagpuffers erweist sich als vorteilhaft, da hierdurch für große Anregungsamplituden ein zweiter Lastpfad zum Bauteilschutz des aktiven Federelements zur Verfügung gestellt ist.

Gemäß einer zweiten Ausführungsform der Erfindung ist das Dämpfungselement zwischen dem Kopplungselement und dem zweiten Lagerelement angeordnet und das Kopplungselement ist über das mindestens eine aktive Federelement am ersten Lagerelement abgestützt. Diese Ausführungsform erweist sich als vorteilhaft, da nur die hochfrequenten Anregungen auf das aktive Federelement weitergeleitet werden. Das Dämpferelement wirkt hier wie ein Hochpassfilter.

Vorzugsweise ist auch bei dieser Ausführungsform wieder ein Anschlagpuffer vorgesehen. Dieser ist vorzugsweise zwischen dem ersten Lagerelement und dem Dämpfungselement angeordnet. Denkbar ist aber auch eine Anordnung des Anschlagspuffers zwischen dem ersten Lagerelement und dem Kopplungselement. Durch den Anschlagspuffer ist wiederum ein zweiter Lastpfad zur Verfügung gestellt, um im Falle großer Anregungsamplituden eine Beschädigung/Zerstörung des aktiven Federelements zu verhindern.

Vorzugsweise ist der Anschlagspuffer aus einem elastomeren Material ausgebildet. Die Ausbildung des Anschlagspuffers aus einem elastomeren Material erweist sich als vorteilhaft, da hierdurch eine zusätzliche Dämpfungswirkung des Lagers zur Verfügung gestellt ist.

Gemäß einer weiteren vorteilhaften Ausführungsform sind die aktiven Federelemente als Piezoaktuatoren ausgebildet. Die Ausbildung der aktiven Federelemente als Piezoaktuatoren hat den Vorteil, dass diese wenig Platz beanspruchen und eine schnelle Ansprechzeit aufweisen.

Weitere Vorteile, Merkmale und Anwendungsmöglichkeiten der vorliegenden Erfindung ergeben sich als der nachfolgenden Beschreibung in Verbindung mit den in den Zeichnungen dargestellten Ausführungsbeispielen.

Die Erfindung wird im Folgenden anhand der in den Zeichnungen dargestellten Ausführungsbeispielen näher beschrieben.

In der Beschreibung, in den Ansprüchen und in der Zeichnung werden die in der unten aufgeführten Liste der Bezugszeichen verwendeten Begriffe und zugeordneten Bezugszeichen verwendet.

In der Zeichnung bedeutet:
- Fig. 1: eine Schnittdarstellung einer ersten Ausführungsform des erfindungsgemäßen Dämpferlagers, und
- Fig. 2: eine Schnittdarstellung einer zweiten Ausführungsform des erfindungsgemäßen Dämpferlagers.

In der nachfolgenden Beschreibung und in den Figuren werden zur Vermeidung von Wiederholungen gleiche Bauteile und Komponenten mit gleichen Bezugszeichen gekennzeichnet, sofern keine weitere Differenzierung erforderlich oder sinnvoll ist.

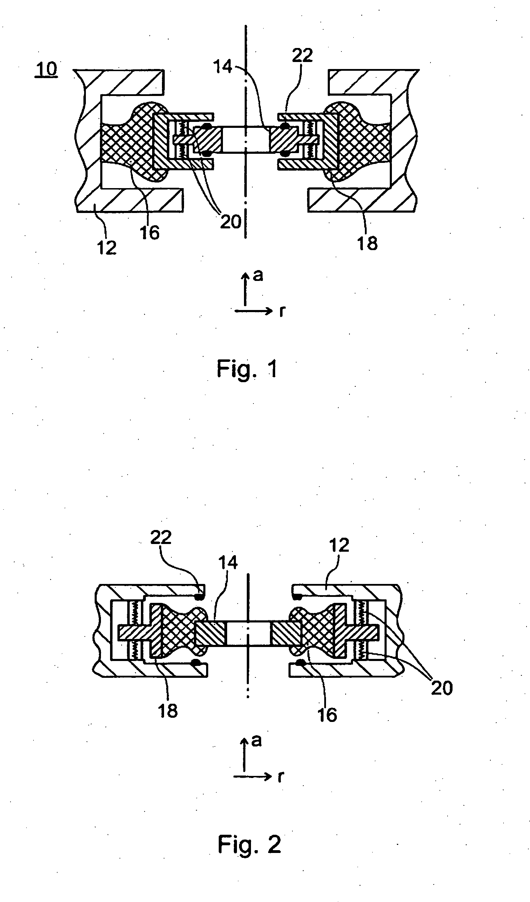

Fig. 1 zeigt ein insgesamt mit der Bezugsziffer 10 bezeichnetes Dämpferlager.

Das Dämpferlager 10 umfasst ein erstes Lagerelement 12 zur Befestigung an einer Kraftfahrzeugkarosserie sowie ein zweites Lagerelement 14, an dem z. B. die Kolbenstange eines Dämpfermoduls befestigt ist. Auf eine Darstellung der Kraftfahrzeugkarosserie sowie der Kolbenstange wurde vorliegend aus Gründen der Übersichtlichkeit verzichtet.

Zwischen dem ersten Lagerelement 12 und dem zweiten Lagerelement 14 ist ein Dämpfungselement 16 aus einem stoßabsorbierenden Werkstoff angeordnet. Das Dämpferelement 16 ist vorliegend in das erste Lagerelement 12 einvulkanisiert und bewirkt eine Feder- Dämpferwirkung bei axialen und taumelnden Bewegungen.

Wie Fig. 1 weiter zu entnehmen ist, ist in radialer Richtung r betrachtet zwischen dem Dämpfungselement 16 und dem zweiten Lagerelement 14 ein Kopplungselement 18 angeordnet. Radial außen ist das Kopplungselement 18 fest mit dem Dämpfungselement 16 verbunden. Das zweite Lagerelement 14 ist in axiale Richtung a betrachtet über ein oberes und unteres, jeweils am Kopplungselement 18 angeordnete und in Reihe zum Dämpfungselement 16 wirksame ansteuerbare, aktive Federelemente 20 in axiale Richtung a abgestützt.

Zudem sind in axiale Richtung a betrachtet zwischen dem zweiten Lagerelement 14 und dem Kopplungselement 18 ein oberer und unter Anschlagpuffer 22 angeordnet. Die Anschlagpuffer 22 bestehen vorliegend aus einem elastomeren Werkstoff.

Über das zweite Lagerelement 14 werden nun die Kräfte in das Dämpferlager 10 eingeleitet. Die Kraftübertragung von zweiten Lagerelement 14 zum Kopplungselement 18 und von dort über das Dämpfungselement 16 zum ersten Lagerelement 12 erfolgt über die ansteuerbaren, aktiven Federelemente 20. Die vorliegend als Piezoaktuatoren ausgebildeten ansteuerbaren, aktiven Federelemente können gegenphasig zum zweiten Lagerelement 14 angeregt werden und somit dämpfend wirkend.

Bei großen Anregungsamplituden am zweiten Lagerelement 14 tritt das zweite Lagerelement 14 über die Anschlagpuffer 22 direkt in Wechselwirkung mit dem Kopplungselement 18, so dass eine Taumelbewegung des Dämpfers und Anregung großer Amplituden direkt vom Dämpfungselement 16 wie bei einem konventionellen Dämpferlager aufgenommen werden.

Bei dem in Fig. 2 dargestellten Ausführungsbeispiel ist in radialer Richtung r betrachtet das Dämpfungselement 16 zwischen dem Kopplungselement 18 und dem zweiten Lagerelement 14 angeordnet. Das Kopplungselement 18 ist seinerseits in axiale Richtung a betrachtet über ein oberes und unteres, in Reihe zum Dämpfungselement 16 wirksames ansteuerbares aktives Federelement 20 am ersten Lagerelement 12 abgestützt.

Weiterhin sind - wie Fig. 2 zu entnehmen ist - in axiale Richtung a betrachtet zwischen dem ersten Lagerelement 12 und dem Dämpfungselement 16 ein oberer und unterer Anschlagpuffer 22 aus einem elastomeren Material angeordnet.

Die Krafteinleitung in das Dämpferlager 10 erfolgt wieder über das zweite Lagerelement 14. Vom zweiten Lagerelement 14 erfolgt die Krafteinleitung über das Dämpferelement 16, Kopplungselement 18 und den ansteuerbaren aktiven Federelementen 22 zum ersten Lagerelement 12. Zur Schwingungsdämpfung können die ansteuerbaren, aktiven Federelemente 22 wiederum gezielt gegenphasig zum zweiten Lagerelement 14 angeregt werden.

### Bezugszeichenliste

- 10: Dämpferlager
- 12: erstes Lagerelement
- 14: zweites Lagerelement
- 16: Dämpferelement
- 18: Kopplungselement
- 20: aktives Federelement
- 22: Anschlagpuffer

- a: axiale Richtung
- r: radiale Richtung

## Patentansprüche

1. Dämpferlager (10) zur Abstützung einer Fahrwerkskomponente an einer Kraftfahrzeugkarosserie, umfassend
- ein erstes Lagerelement (12) zur Befestigung an der Kraftfahrzeugkarosserie;
- ein zweites Lagerelement (14) zur Befestigung an der Fahrwerkskomponente, und
- ein in radialer Richtung (r) betrachtet zwischen dem ersten und zweiten Lagerelement (12, 14) angeordnetes Dämpfungselement (16) aus einem stoßabsorbierenden Werkstoff,
**dadurch gekennzeichnet, dass** zwischen dem ersten und zweiten Lagerelement (12, 14) ein Kopplungselement (18) angeordnet ist, über das das zweite Lagerelement (14) mit mindestens einem am Kopplungselement (18) angeordneten und in Reihe zum Dämpfungselement (16) wirksamen aktiven Federelement (20) in Wirkverbindung steht.

2. Dämpferlager (10) nach Aspruch 1, **dadurch gekennzeichnet, dass** das Dämpfungselement (16) zwischen dem ersten Lagerelement (12) und dem Kopplungselement (18) angeordnet ist und das zweite Lagerelement (14) über das mindestens eine aktive Federelement (20) am Kopplungselement (18) abgestützt ist.

3. Dämpferlager (10) nach Anspruch 2, **dadurch gekennzeichnet, dass** zwischen dem zweiten Lägerelement (14) und dem Kopplungselement (18) ein Anschlagpuffer (22) angeordnet ist.

4. Dämpferlager (10) nach Anspruch 1, **dadurch gekennzeichnet, dass** das Dämpfungselement (16) zwischen dem Kopplungselement (18) und dem zweiten Lagerelement (14) angeordnet ist und das Kopplungselement (18) über das mindestens eine aktive Federelement (20) am ersten Lagerelement (12) abgestützt ist.

5. Dämpferlager (10) nach Anspruch 4, **dadurch gekennzeichnet, dass** zwischen dem ersten Lagerelement (12) und dem Dämpfungselement (16) und/oder zwischen dem ersten Lagerelement (12) und dem Kopplungselement (18) ein Anschlagpuffer (22) angeordnet ist.

6. Dämpferlager (10) nach Anspruch 3 oder 5, **dadurch gekennzeichnet, dass** der Anschlagpuffer (22) aus einem elastomeren Material ausgebildet ist.

7. Dämpferlager (10) nach einem der vorgenannten Ansprüche, **dadurch gekennzeichnet, dass** das aktive Federelement (20) als ein Piezoaktuator ausgebildet ist.

## Claims

1. Damper mounting (10) for supporting a suspension component on a motor vehicle body, comprising:
- a first mounting element (12) for fixing to a motor vehicle body;
- a second mounting element (14) for fixing to the suspension component; and
- a damping element (16) which is arranged between the first and second mounting elements (12, 14) viewed in the radial direction (r) and is made of an impact-absorbing material,
**characterised in that** a coupling element (18) is arranged between the first and second mounting elements (12, 14), via which the second mounting element (14) is actively connected to at least one active spring element (20) arranged on the coupling element (18) and effective in series to the damping element (16).

2. Damper mounting (10) according to claim 1, **characterised in that** the damping element (16) is arranged between the first mounting element (12) and the coupling element (18), and the second mounting element (14) is supported on the coupling element (18) via the at least one active spring element (20).

3. Damper mounting (10) according to claim 2, **characterised in that** a stop buffer (22) is arranged between the second mounting element (14) and the coupling element (18).

4. Damper mounting (10) according to claim 1, **characterised in that** the damping element (16) is arranged between the coupling element, (18) and the second mounting element (14), and the coupling element (18) is supported on the first mounting element (12) via the at least one active spring element (20).

5. Damper mounting (10) according to claim 4, **characterised in that** a stop buffer (22) is arranged between the first mounting element (12) and the damping element (16) and/or between the first mounting element (12) and the coupling element (18).

6. Damper mounting (10) according to claim 3 or 5, **characterised in that** the stop buffer (22) is made of an elastomer material.

7. Damper mounting (10) according to any of the preceding claims, **characterised in that** the active spring element (20) is configured as a piezo-actuator.

## Revendications

1. Support d'amortisseur (10) pour supporter un composant de suspension sur une carrosserie de véhicule automobile, comprenant :
- un premier élément de support (12) pour la fixation à la carrosserie de véhicule automobile ;
- un deuxième élément de support (14) pour la fixation au composant de suspension ; et
- un élément amortisseur (16) en un matériau absorbant les chocs agencé, vu en direction radiale (r), entre le premier et le deuxième élément de support (12, 14) ;
**caractérisé en ce qu'**un élément de couplage (18) est agencé entre le premier et le deuxième élément de support (12, 14), élément de couplage par l'intermédiaire duquel le deuxième élément de support (14) est en liaison active avec au moins un élément formant ressort (20) actif, agencé sur l'élément de couplage (18) et agissant en série avec l'élément amortisseur (16).

2. Support d'amortisseur (10) selon la revendication 1, **caractérisé en ce que** l'élément amortisseur (16) est agencé entre le premier élément de support (12) et l'élément de couplage (18) et **en ce que** le deuxième élément de support (14) est supporté par l'élément de couplage (18) par l'intermédiaire de l'au moins un élément formant ressort (20) actif.

3. Support d'amortisseur (10) selon la revendication 2, **caractérisé en ce qu'**une butée de rebond (22) est agencée entre le deuxième élément de support (14) et l'élément de couplage (18).

4. Support d'amortisseur (10) selon la revendication 1, **caractérisé en ce que** l'élément amortisseur (16) est agencé entre l'élément de couplage (18) et le deuxième élément de support (14) et **en ce que** l'élément de couplage (18) est supporté par le premier élément de support (12) par l'intermédiaire de l'au moins un élément formant ressort (20) actif.

5. Support d'amortisseur (10) selon la revendication 4, **caractérisé en ce qu'**une butée de rebond (22) est agencée entre le premier élément de support (12) et l'élément amortisseur (16) et/ou entre le premier élément de support (12) et l'élément de couplage (18).

6. Support d'amortisseur (10) selon la revendication 3 ou 5, **caractérisé en ce que** la butée de rebond (22) est conçue en un matériau élastomère.

7. Support d'amortisseur (10) selon l'une des revendications précédentes, **caractérisé en ce que** l'élément formant ressort (20) actif est conçu comme un actionneur piézoélectrique.
